# EUROPÄISCHE PATENTSCHRIFT

(11) **EP 3 498 378 B1**
(45) Veröffentlichungstag und Bekanntmachung des Hinweises auf die Patenterteilung: **07.04.2021**
(21) Anmeldenummer: 18207487.2
(22) Anmeldetag: 21.11.2018
(51) Int. Cl.: B02C 13/09, B02C 13/282, C22C 38/04, C21D 7/02, B32B 15/01

(54) **INNENRAUMAUSKLEIDUNG UND VERFAHREN ZUR HERSTELLUNG**
INTERIOR LINING AND METHOD FOR MANUFACTURING THE SAME
REVÊTEMENT D'ESPACE INTÉRIEUR ET SON PROCÉDÉ DE FABRICATION

(30) Priorität: 13.12.2017 DE 102017129819
(43) Veröffentlichungstag der Anmeldung: 19.06.2019
(73) Patentinhaber: Craco GmbH, 57629 Atzelgift (DE)
(72) Erfinder: SCHÖNENBERG, Erich, 57629 Limbach (DE)
(74) Vertreter: advotec.

(56) Entgegenhaltungen:
- EP-A1- 0 091 897
- DE-A1-102014 216 452
- DE-C- 666 161
- US-A- 3 918 649

## Beschreibung

Die Erfindung betrifft eine Innenraumauskleidung für eine Zerkleinerungsmaschine, eine Zerkleinerungsmaschine sowie ein Verfahren zur Herstellung einer Innenraumauskleidung, wobei die Innenraumauskleidung mit zumindest einer einstückigen Platte ausgebildet ist, die in einem Zerkleinerungsraum der Zerkleinerungsmaschine anordbar ist, wobei die Platte aus Stahlguss ausgebildet ist, wobei der Stahlguss als ein Legierungsbestandteil 8 bis 25, vorzugsweise 10 bis 20 Masseprozent Mangan enthält.

Bei den aus dem Stand der Technik bekannten Zerkleinerungsmaschinen kann zwischen Zerkleinerungsmaschinen mit drehbeweglichen Hämmern an einem Rotor und Zerkleinerungsmaschinen ohne drehbewegliche Hämmer unterschieden werden.

Zerkleinerungsmaschinen, die unter anderem einen Rotor aufweisen, werden auch als sogenannte Hammerbrecher bezeichnet, da an dem Rotor zwischen Tragscheiben drehbare Schlagwerkzeuge bzw. Hämmer gelagert sind, mittels derer eine Zerkleinerung von beispielsweise Metallschrott, Kunststoffabfällen, Holzabfällen oder ähnlichen Fraktionen erfolgen kann. Zerkleinerungsmaschinen ohne drehbewegliche Hämmer werden regelmäßig als Prallmühlen bezeichnet und weisen Schneiden oder Kanten auf, die ebenfalls eine Zerkleinerung eines der Zerkleinerungsmaschine zugeführten Aufgabeguts bewirken. Eine Zerkleinerung von Aufgabestücken erfolgt dabei im Wesentlichen mittels der Hämmer durch Schlag, wobei mittels der Kanten bzw. Schlagleisten des Rotors eine Zerkleinerung durch Prall der Aufgabestücke erfolgt.

Die Rotoren mit Hämmern dienen dabei einer vergleichsweise groben Zerkleinerung des zugeführten Aufgabeguts, wobei regelmäßig unterhalb eines Rotors ein Sieb angeordnet ist, welches zur Fraktionierung bzw. Trennung des zerkleinerten Aufgabeguts dient. Die Rotoren mit Schneiden oder Kanten dienen einer vergleichsweise feinen Zerkleinerung des zugeführten Aufgabeguts, wobei die Schneiden bzw. Schlagleisten mit einer Prallschwinge oder Prallplatten im Zerkleinerungsraum zusammenwirken. Die Prallschwinge ist im Wesentlichen plattenförmig ausgebildet und im Zerkleinerungsraum relativ zum Rotor so angeordnet, dass zwischen der Prallschwinge bzw. einer unteren Kante der Prallschwinge und dem Rotor ein Spalt einer bestimmten Größe ausgebildet ist. Durch einen Aufgabeschacht dem Zerkleinerungsraum zugeführtes Aufgabegut fällt unter anderem auf den Rotor und wird von den Schlagleisten entsprechend der Drehrichtung des Rotors auf die Prallschwinge geschleudert und durch Prall zerkleinert. Stücke von Aufgabegut, die größer sind als der ausgebildete Spalt können diesen nicht passieren und verbleiben im Zerkleinerungsraum so lange, bis sie eine entsprechende Größe zum Passieren des Spalts aufweisen. Der prinzipielle Aufbau einer derartigen Zerkleinerungsmaschine ist beispielsweise aus der DE 10 2014 216 452 A1 bekannt.

Insbesondere im Bereich des Bauschuttrecyclings wird regelmäßig stahlarmierter Beton zerkleinert, der eine hohe Festigkeit aufweist und daher oft zu einem Bruch bzw. einem Bauteilversagen von Schlagleisten oder einer Innenraumauskleidung in einem Zerkleinerungsraum führt. Die Innenraumauskleidung einer Zerkleinerungsmaschine besteht regelmäßig aus Platten, die aus vergütetem Stahlguss bestehen und im Bereich des Rotors und der Prallschwinge auswechselbar angeordnet sind. Die Platten schützen die Zerkleinerungsmaschine bzw. den Zerkleinerungsraum gegen eine Beschädigung durch im Zerkleinerungsraum infolge des Zerkleinerungsvorgangs umherfliegendes Aufgabegut. Um einen Bruch der Platten durch darauf auftreffendes Aufgabegut zu vermeiden, müssen diese besonders zäh ausgebildet sein. Dies ist jedoch besonders nachteilig, wenn ebenfalls im Bereich des Bauschuttrecyclings beispielsweise Kalkstein zerkleinert wird, da dieser eine besonders große abrasive Wirkung auf die Innenraumauskleidung bzw. die gegenüber dem Kalkstein exponierten Bauteile der Zerkleinerungsmaschine in dem Innenraum hat. Ein unerwünschter abrasiver Abtrag von Material der Platten tritt insbesondere dann auf, wenn vergleichsweise weiches Aufgabegut zerkleinert wird. In diesem Fall ist es vorteilhaft, wenn die Platten eine große Härte aufweisen, was nicht gleichzeitig mit den Anforderungen an die Zähigkeit vereinbar ist. Da eine Zerkleinerungsmaschine regelmäßig für unterschiedlichste Arten von Aufgabegut eingesetzt wird, kann es infolge von Abrasion oder Bruch zu einem häufigen Bauteilversagen mit hohen Materialkosten und langen Stillstandszeiten der Zerkleinerungsmaschine kommen.

Die US 3 918 649 A zeigt eine Zerkleinerungsmaschine, welche einen Rotor und ein Gehäuse umfasst. Weiter weist die Zerkleinerungsmaschine eine Innenraumauskleidung auf, mittels derer eine Beschädigung des Gehäuses durch sich schnell bewegende Fragmente von zerkleinertem Aufgabegut verhindert wird. Dabei ist die Innenraumauskleidung durch einen austenitischen Manganstahl mit einem Mangangehalt von 11 bis 14% ausgebildet. Weiter weisen die Platten eine Tragschicht sowie eine dem Rotor zugewandte Deckschicht auf.

Die EP 0 091 897 A1 beschreibt einen kaltverfestigenden austenitischen Manganstahl und ein Verfahren zur Herstellung desselben.

DE 666 161 C offenbart ein Verfahren zur Herstellung von Brechbacken.

Der vorliegenden Erfindung liegt daher die Aufgabe zugrunde, eine Innenraumauskleidung sowie ein Verfahren zu deren Herstellung vorzuschlagen, die bzw. das bei unterschiedlichstem Aufgabegut eine längere Standzeit ermöglicht.

Diese Aufgabe wird durch eine Innenraumauskleidung mit den Merkmalen des Anspruchs 1, eine Zerkleinerungsmaschine mit den Merkmalen des Anspruchs 6 und ein Verfahren mit den Merkmalen des Anspruchs 13 gelöst.

Die erfindungsgemäße Innenraumauskleidung für eine Zerkleinerungsmaschine ist mit zumindest einer einstückigen Platte ausgebildet, die in einem Zerkleinerungsraum der Zerkleinerungsmaschine anordbar ist, wobei die Platte aus Stahlguss ausgebildet ist, wobei der Stahlguss als ein Legierungsbestandteil 8 bis 25, vorzugsweise 10 bis 20 Masseprozent Mangan enthält, wobei die Platte mit einer Tragschicht und einer Deckschicht ausgebildet ist, wobei die Deckschicht mittels Kaltumformung des Stahlgusses ausgebildet und kaltverfestigt ist, wobei die Deckschicht mittels von einem Stempel, einer Walze oder von Hämmern auf die Platte ausgeübten Drucks kaltverfestigt ist.

Die Platte kann demnach im Zerkleinerungsraum der Zerkleinerungsmaschine mit einem Rotor angeordnet werden, wobei der Rotor beispielsweise Schlagwerkzeuge, Reißzähne und/oder Schlagleisten aufweisen kann. Die Zerkleinerungsmaschine kann daher universell einsetzbar sein, so dass mit dem Rotor die unterschiedlichsten Arten von Aufgabegut bearbeitet werden können. Die Platte besteht vollständig aus Stahlguss und ist durch Gießen einstückig ausgebildet. Durch den hohen Anteil an Mangan als ein Legierungsbestandteil ist es möglich, die Platte mit großer Härte auszubilden. Je nach Behandlung der gegossenen Platte kann dann ein überwiegend bainitisches, austenitisches und/oder martensitisches Gefüge der Platte ausgebildet werden. Insbesondere ist die Deckschicht mittels der teilweisen Kaltumformung des Stahlgusses der Platte, bezogen auf eine Gesamtdicke der Platte, kaltverfestigt ausgebildet. Das heißt, dass die Deckschichte erst durch die teilweise Kaltumformung des Stahlgusses der Platte ausgebildet wird. Die nicht der Kaltumformung ausgesetzten Bereiche der Platte bilden dann die Tragschicht, die unmittelbar an die Deckschicht angrenzt. Die Deckschicht kann dabei in die Tragschicht, beispielsweise unter Ausbildung eines Gradienten eines Gefüges, übergehen. Durch die Kaltumformung, beispielsweise durch Aufbringen von Druck auf die Platte, mittels Stempel, Walzen, Hämmer oder dergleichen, werden Versetzungen und Eigenspannungen im Stahlguss der Platte hervorgerufen, die zu einer Erhöhung der Härte und der Streckgrenze führen, was eine Standzeit der Deckschicht der Platte wesentlich erhöht. Druck- oder Zugspannungen, die durch Aufprallen von Aufgabegut auf die Deckschicht erzeugt werden können, werden in die Tragschicht verlagert, wodurch ein Bruch der Platte wirkungsvoll verhindert werden kann. Unter Kaltumformung wird hier ein plastisches Umformen des Stahlgusses unterhalb seiner Rekristallisationstemperatur verstanden.

Erfindungsgemäß wird die Deckschicht mittels von einem Stempel, einer Walze oder von Hämmern auf die Platte ausgeübten Drucks kaltverfestigt. Eine abschließende Wärmebehandlung der Platte nach der Kaltumformung ist ausgeschlossen bzw. nicht vorgesehen, da dann die Kaltverfestigung wieder abgebaut werden kann. Weiter kann durch die Kaltumformung auch eine Duktilität der Deckschicht verringert werden, wodurch die Deckschicht vergleichsweise spröde gegenüber der Tragschicht ausgebildet werden kann.

Besonders vorteilhaft ist es, wenn die Deckschicht überwiegend matensitisches Gefüge aufweist. Das martensitische Gefüge kann besonders leicht durch die Kaltumformung des Stahlgusses ausgebildet werden. Dabei kann das martensitische Gefüge relativ zu möglichen anderen Gefügen des Stahlgusses im Bereich der Deckschicht mit einem Anteil von > 50 Masseprozent vorliegen. Das martensitische Gefüge kann aus austenitischem bzw. bainitischem Stahlguss durch die Kaltumformung erhalten werden, wobei eine Festigkeit bzw. Zugfestigkeit und Härte des Stahlgusses zunehmen kann. Im Gegensatz dazu kann eine Dehnung und Kerbschlagzähigkeit der Deckschicht abnehmen. Es hat sich gezeigt, dass eine Zunahme an Festigkeit abhängig ist von der aufgebrachten kinetischen Energie, mit der sich die Verformung des Stahlgusses im Bereich der Deckschicht vollzieht sowie von der Veranlagung des Stahlgusses zum Kaltverfestigen. Durch die Ausbildung des martensitischen Gefüges kommt zu einer Härtesteigerung des Stahlgusses im Bereich der Deckschicht, was eine Abriebfestigkeit bzw. einen Widerstand gegen einen abrasiven Verschleiß der Deckschicht wesentlich erhöht. Prinzipiell kann das martensitische Gefüge auch durch eine Temperaturbehandlung erhalten werden, jedoch ist eine Temperaturbehandlung einer Platte aufwendig und führt nicht zu dem gewünschten Ergebnis mit zwei voneinander hinsichtlich Härte und Zähigkeit wesentlich verschiedenen Schichten der Platte.

So kann auch die Tragschicht ein überwiegend bainitisches und/oder austenitisches Gefüge aufweisen. Dies kann sich dadurch ergeben, dass der Stahlguss dieses Gefüge aufweist und die Tragschicht nicht der Kaltumformung unterzogen wird.

Die Deckschicht kann eine vergleichsweise größere Härte als die Tragschicht aufweisen. Die Tragschicht kann dann gleichzeitig eine vergleichsweise größere Zähigkeit als die Deckschicht aufweisen. Die Tragschicht kann somit einem Abplatzen oder Ausbrechen von Material der Platte und die Deckschicht kann einem abrasiven Abtrag von Material der Platte vorteilhaft entgegenwirken.

Die Deckschicht kann eine Härte von 350 bis 650 Brinell (HB), vorzugsweise eine Härte von 600 bis 650 Brinell (HB) aufweisen. Die Härte der Deckschicht kann so ausgewählt werden, dass die Deckschicht an das häufig mit einer Zerkleinerungsmaschine behandelte Aufgabegut angepasst ist.

Die erfindungsgemäße Zerkleinerungsmaschine umfasst eine erfindungsgemäße Innenraumauskleidung, wobei die Zerkleinerungsmaschine einen Rotor und ein Gehäuse umfasst, wobei das Gehäuse einen Zerkleinerungsraum, einen Aufgabeschacht und einen Ausgabeschacht ausbildet, wobei der Rotor zur Zerkleinerung von Aufgabegut innerhalb des Zerkleinerungsraums drehbar angeordnet ist, derart, dass das Aufgabegut über den Aufgabeschicht dem Zerkleinerungsraum zuführbar und zerkleinerten Aufgabegut über den Ausgabeschacht aus dem Zerkleinerungsraum ausleitbar ist, wobei eine Platte der Innenraumauskleidung in dem Zerkleinerungsraum angeordnet ist und eine Prallfläche für Aufgabegut ausbildet. Da die Platte unmittelbar mit dem Aufgabegut in Kontakt gelangt, ist diese einem vergleichsweise hohen Verschleiß ausgesetzt. Hinsichtlich der vorteilhaften Wirkungen der erfindungsgemäßen Zerkleinerungsmaschine wird auf die Vorteilsbeschreibung der erfindungsgemäßen Innenraumauskleidung verwiesen.

Weiter kann die Zerkleinerungsmaschine eine Siebvorrichtung umfassen, die ein schalenförmiges Sieb aufweist, welches unterhalb des Rotors und an dem Rotor so angeordnet sein kann, dass zwischen dem Rotor und dem Sieb ein Ringspalt ausgebildet ist. Das Sieb kann demnach in seinem Querschnitt nahezu halbkreisförmig ausgebildet sein, wobei sich in dem Ringspalt zerkleinertes Aufgabegut ansammeln und je nach Größe durch das Sieb hindurch in den Ausgabeschacht gelangen kann. Das Sieb kann dann besonders vorteilhaft eingesetzt werden, wenn der Rotor Schlagwerkzeuge bzw. Hämmer aufweist. Selbst wenn der Rotor Schlagleisten aufweist, können diese dazu genutzt werden, den Ringspalt auszuräumen, um so eine Verstopfung des Siebs zu verhindern. Prinzipiell kann die Zerkleinerungsmaschine aber auch ohne das Sieb, wie eine Prallmühle betrieben werden.

Vorteilhaft ist es, wenn die Innenraumauskleidung eine Mehrzahl austauschbarer Platten umfasst. Die Platten können dann eine Wandung eines Innenraums bzw. Zerkleinerungsraums so weit als möglich abdecken und diese vor Verschleiß schützen. Weiter können die Platten auch eine Mantelfläche des Rotors bzw. Tragscheiben des Rotors zumindest teilweise oder vollständig abdecken und vor Verschleiß schützen. Die Platten können eine identische oder auch voneinander abweichende Geometrie aufweisen und so positioniert und montiert sein, dass sie leicht ausgetauscht werden können, wenn sie verschlissen sind.

Die Zerkleinerungsmaschine kann eine Prallschwingenvorrichtung umfassen, die eine Prallschwinge aufweist, wobei die Prallschwinge in dem Zerkleinerungsraum angeordnet und dem Rotor zugeordnet sein kann, wobei die Platte an der Prallschwinge angeordnet sein kann. Die Prallschwingenvorrichtung kann auch zwei oder mehr Prallschwingen aufweisen, die dann in Reihe nacheinander, relativ bezogen auf eine Drehrichtung des Rotors, im Zerkleinerungsraum angeordnet sein können. Die Platte kann dann an der Prallschwinge austauschbar angeordnet sein und mit der Deckschicht eine Prallfläche für Aufgabegut ausbilden. Insbesondere kann die Prallschwinge auch eine Mehrzahl von Platten zur Ausbildung der Prallfläche aufweisen. Da im Bereich der Prallschwinge die Platten unmittelbar mit dem Aufgabegut in Kontakt gelangen, sind diese einem vergleichsweise hohen Verschleiß ausgesetzt. Die Platten können relativ zueinander auch so angeordnet sein, dass mehrere Prallflächen ausgebildet werden. Dadurch kann eine Führung des Aufgabeguts hin zu dem Rotor bewirkt werden. Die Prallflächen können in einem Winkel relativ zu einer Achse des Rotors so angeordnet sein, dass das vom Rotor auf die Prallfläche geschleuderte Aufgabegut in eine gewünschte Richtung in dem Zerkleinerungsraum bzw. auf den Rotor zurückgeworfen wird.

Die Prallschwinge kann relativ zum Rotor räumlich positionierbar ausgebildet sein, derart, dass ein Spalt zwischen der Prallschwinge und dem Rotor verstellbar ist. Damit kann dann der Spalt so eingestellt bzw. verstellt werden, dass entsprechend der Spaltgröße zerkleinertes Aufgabegut den Spalt passieren und in den Ausgabeschacht gelangen kann. Darüber hinaus wird durch die Verstellbarkeit der Prallschwinge relativ zu dem Rotor ein Entfernen von Störstoffen wesentlich erleichtert, da sich eventuell im Spalt verklemmte Störstoffe durch ein Vergrößern des Spalts bzw. Verstellen der Prallschwinge relativ zum Rotor leichter entfernen lassen. Die Prallschwingenvorrichtung kann eine Positioniereinheit aufweisen, mittels der die Prallschwinge, und damit die Platte relativ zum Rotor räumlich positionierbar ist. Die Positioniereinheit kann beispielsweise einen Hydraulikzylinder umfassen, der die Prallschwinge in den Zerkleinerungsraum hinein oder heraus bewegen kann. Die Prallschwinge kann dabei in einem Schwingenlager gelagert sein und auch eine Feder und/oder Dämpfung aufweisen. Das Schwingenlager kann dabei vorzugsweise in einem oberen Ende der Prallschwinge ausgebildet sein, derart, dass in den Aufgabeschacht eingefülltes Aufgabegut entlang der Prallschwinge auf den Rotor geleitet wird. Mittels des Hydraulikzylinders kann ein vergleichsweise großer Verstellweg der Prallschwinge realisiert werden. Sofern mehrere Prallschwingen vorgesehen sind, können unterschiedlich große Spalte zwischen den jeweiligen Prallschwingen und dem Rotor ausgebildet werden. Somit kann dann beispielsweise eine zweistufige Zerkleinerung von Aufgabegut mittels der Prallschwingen erfolgen.

Auch kann die Platte mit über die Prallfläche parallel und äquidistant verlaufenden Nuten ausgebildet sein. Ein Nutenabstand kann dabei so ausgewählt sein, dass dieser an eine durchschnittliche Stückgröße eines Aufgabeguts angepasst ist. Auf die Prallfläche auftreffendes Aufgabegut kann dann mittels der Nuten abgelenkt werden oder das Aufgabegut trifft dann an mehreren Punkten der Prallfläche auf, so dass eine Zerkleinerung des Aufgabeguts durch die Nuten begünstigt wird.

Besonders vorteilhaft ist es, wenn die Nuten jeweils mit einem kerb-, rillen-, trapez-, evolventen- oder wellenförmigem Querschnitt ausgebildet sind.

Weiter kann die Platte derart positioniert sein, dass die Nuten in radialer Richtung relativ zum Rotor verlaufend angeordnet sind. Die Nuten begünstigen dann eine Führung des Aufgabeguts im Zerkleinerungsraum in Richtung des Rotors.

Bei dem erfindungsgemäßen Verfahren zur Herstellung einer Innenraumauskleidung einer Zerkleinerungsmaschine wird die Innenraumauskleidung mit zumindest einer einstückigen Platte ausgebildet, die in einem Zerkleinerungsraum der Zerkleinerungsmaschine anordbar ist, wobei die Platte aus Stahlguss ausgebildet wird, wobei der Stahlguss als ein Legierungsbestandteil 8 bis 25, vorzugsweise 10 bis 20 Masseprozent Mangan enthält, wobei die Platte mit einer Tragschicht und einer Deckschicht ausgebildet wird, wobei die Deckschicht mittels Kaltumformung des Stahlgusses ausgebildet und kaltverfestigt wird, wobei die Deckschicht mittels von einem Stempel, einer Walze oder von Hämmern auf die Platte ausgeübten Drucks kaltverfestigt wird. Zu den vorteilhaften Wirkungen des erfindungsgemäßen Verfahrens wird auf die Vorteilsbeschreibung der erfindungsgemäßen Innenraumverkleidung verwiesen.

Mittels der Kaltumformung kann die Deckschicht mit einem überwiegend martensitischen Gefüge ausgebildet werden. Bei der Kaltumformung kann es dann zu einer Umwandlung eines austenitischen Gefüges oder einer mechanisch stabilen Austenit-Phase des bainitischen Gefüges des Stahlgusses in martensitisches Gefüge im Bereich der Deckschicht kommen. Durch die Kaltumformung kann dann eine Härtesteigerung des Stahlgusses im Bereich der Deckschicht erzielt werden bzw. die Deckschicht kann ausgebildet werden.

Vor der Kaltumformung können mittels Bearbeitung der Platte mit einem Scheibenfräser parallel und äquidistent verlaufende Nuten ausgebildet werden. Diese spanende Bearbeitung der Platte wird vorzugsweise vor der Kaltumformung durchgeführt, da eine spanende Bearbeitung der kaltverfestigten Deckschicht kaum möglich ist.

Weitere vorteilhafte Ausführungsformen des Verfahrens ergeben sich aus den Merkmalsbeschreibungen der auf den Erzeugnisanspruch 1 rückbezogenen Unteransprüchen.

Nachfolgend werden bevorzugte Ausführungsformen der Erfindung unter Bezugnahme auf die beigefügten Zeichnungen näher erläutert.

Es zeigen:
- **Fig. 1**: eine Querschnittansicht einer Ausführungsform einer Zerkleinerungsmaschine;
- **Fig. 2**: eine Querschnittansicht einer ersten Ausführungsform einer Platte;
- **Fig. 3**: eine Querschnittansicht einer zweiten Ausführungsform einer Platte;
- **Fig. 4**: eine Querschnittansicht einer dritten Ausführungsform einer Platte;
- **Fig. 5**: eine Querschnittansicht einer vierten Ausführungsform einer Platte;
- **Fig. 6**: eine schematische Darstellung einer Kaltumformung einer Platte in einer ersten Ausführungsform;
- **Fig. 7**: eine schematische Darstellung einer Kaltumformung einer Platte in einer zweiten Ausführungsform;
- **Fig. 8**: eine perspektivische Darstellung einer Prallschwinge.

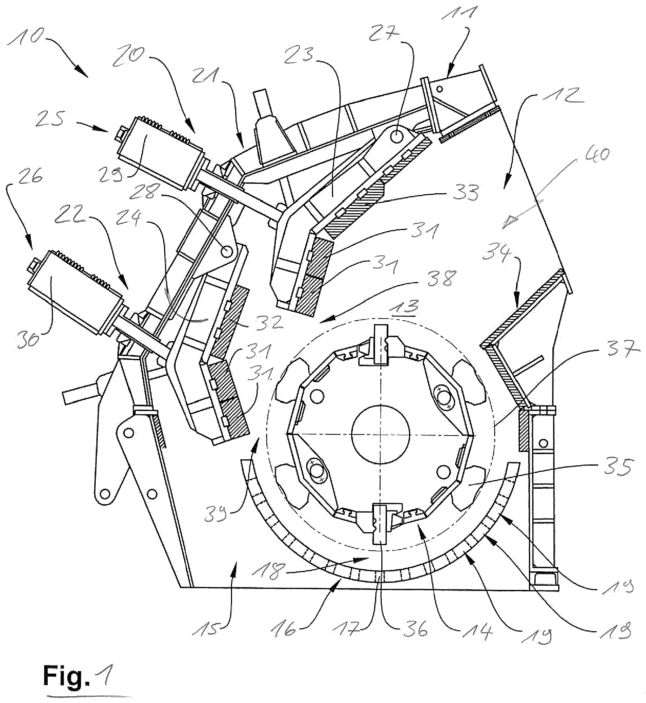

Die **Fig. 1** zeigt eine Querschnittansicht einer Zerkleinerungsmaschine 10. Die Zerkleinerungsmaschine 10 umfasst ein Gehäuse 11, welches einen Aufgabeschacht 12 zur Aufnahme von hier nicht näher dargestelltem Aufgabegut ausbildet. Der Aufgabeschacht 12 mündet in einem Zerkleinerungsraum 13, in dem ein Rotor 14 drehbar angeordnet ist. An den Zerkleinerungsraum 13 schließt ein Ausgabeschacht 15 an, über den das zerkleinerte Aufgabegut aus der Zerkleinerungsmaschine 10 ausgeleitet werden kann. Weiter umfasst die Zerkleinerungsmaschine 10 eine Siebvorrichtung 16, die im Wesentlichen von einem schalenförmigen Sieb 17 ausgebildet ist und unterhalb des Rotors 14 so angeordnet ist, dass zwischen dem Rotor 14 und dem Sieb 17 ein Ringspalt 18 ausgebildet ist. In dem Sieb 17 sind eine Vielzahl von Durchgangsöffnungen 19 ausgebildet, durch die zerkleinertes Aufgabegut hindurchfallen kann. Die Durchgangsöffnungen 19 bestimmen eine Korngröße des zerkleinerten Aufgabeguts und sind hier als rund ausgebildet, können aber prinzipiell jeden beliebigen Querschnitt aufweisen.

Weiter umfasst die Zerkleinerungsmaschine 10 eine Prallschwingenvorrichtung 20, die ihrerseits zwei Prallschwingeneinrichtungen 21 und 22 aufweist, wobei die Prallenschwingeneinrichtungen 21 und 22 jeweils eine Prallschwinge 23 bzw. 24 sowie eine Positioniereinheit 25 bzw. 26 aufweisen. Die Prallschwingen 23 und 24 sind jeweils in Schwingenlagern 27 bzw. 28 an dem Gehäuse 11 drehbar gelagert. Weiter können die Prallschwingen 23 und 24 mittels Hydraulikzylindern 29 bzw. 30 der Positioniereinheiten 25 bzw. 26 in den Zerkleinerungsraum 13 hinein- oder wahlweise herausbewegt werden. An den Prallschwingen 23 und 24 sind eine Mehrzahl von Platten 31, 32 bzw. 33 lösbar befestigt, so dass diese leicht ausgetauscht werden können.

Darüber hinaus sind in den Zerkleinerungsraum 13 und dem Aufgabeschacht 12 Platten 34 angeordnet, um eine Beschädigung des Gehäuses 11 bzw. des Aufgabeschachts 12 und des Zerkleinerungsraums 13 durch Aufgabegeut zu vermeiden. Der Rotor 14 ist mit Hämmern 35 und Schlagleisten 36 ausgestattet, so dass die Hämmer 35 einen Außendurchmesser 37 des Rotors 14 bestimmen. Die Prallschwinge 23 ist nunmehr mittels des Hydraulikzylinders 29 relativ zu dem Rotor 14 so angeordnet, dass zwischen der Prallschwinge 23 und dem Außendurchmesser 37 ein erster Spalt 38 ausgebildet ist. Die Prallschwinge 24 ist mittels der Positioniereinheit 26 relativ zu dem Rotor 14 so angeordnet, dass zwischen der Prallschwinge 24 und dem Außendurchmesser 37, relativ bezogen auf eine Drehrichtung des Rotors 14, ein zweiter Spalt 39 ausgebildet ist, der dem ersten Spalt 38 nachfolgt. Vorzugsweise ist der erste Spalt 38 größer als der zweite Spalt 39 ausgebildet. Sämtliche Platten 31, 32, 33 und 34 sind hier vollständig aus Stahlguss ausgebildet, wobei der Stahlguss als ein Legierungsbestandteil 8 bis 25, vorzugsweise 10 bis 20 Masseprozent Mangan enthält, und wobei eine Tragschicht und eine Deckschicht ausgebildet sind, wobei die Deckschicht mittels Kaltumformung des Stahlgusses kaltverfestigt ist. Die Platten 31, 32, 33 und 34 bilden zusammen eine Innenraumauskleidung 40 der Zerkleinerungsmaschine 10 aus.

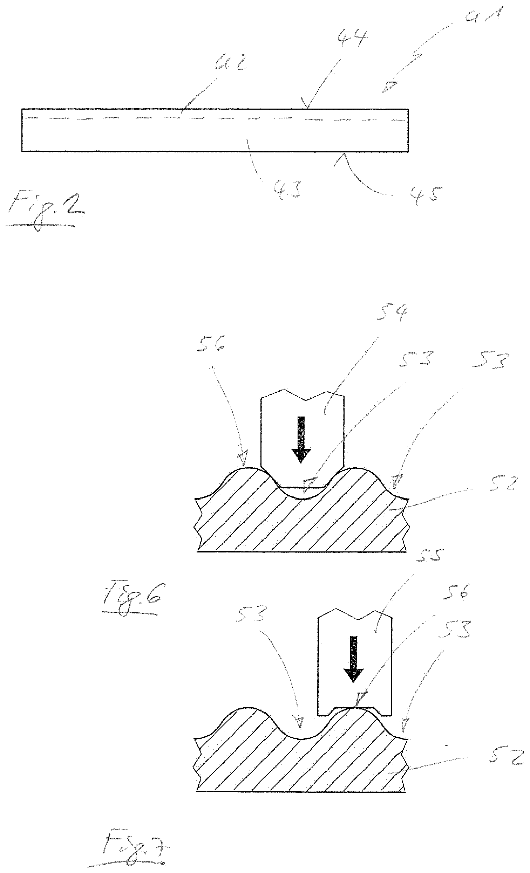

Die **Fig. 2** zeigt eine Platte 41, einer nicht näher dargestellte Innenauskleidung in einer ersten Ausführungsform. Die Platte 41 ist einstückig ausgebildet und besteht ausschließlich aus Stahlguss. Durch eine teilweise Kaltumformung des Stahlgusses ist eine Deckschicht 42 ausgebildet, die in eine Tragschicht 43 der Platte 41 übergeht. Die Deckschicht 42 ist kaltverfestigt und vergleichsweise härter als die Tragschicht 43. Die Deckschicht 42 bildet eine Prallfläche 44 für Aufgabegut und die Tragschicht 43 eine Auflagefläche 45 zur Anlage an einem Gehäuse bzw. Gestell einer hier nicht dargestellten Zerkleinerungsmaschine aus.

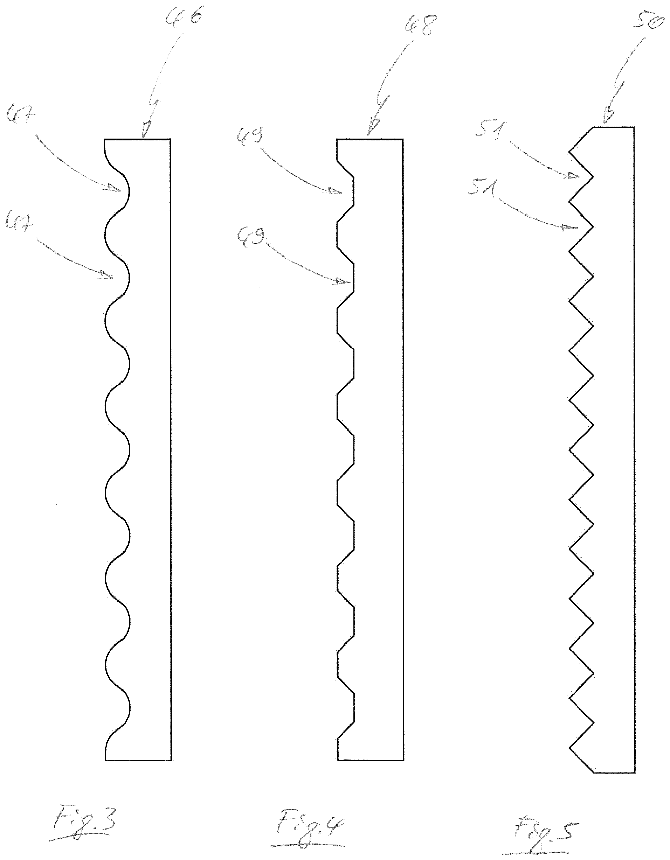

Die **Fig. 3** zeigt eine Platte 46 mit einer Innenraumauskleidung, die im Bereich einer hier nicht näher dargestellten Deckschicht mit Nuten 47 ausgebildet ist. Die Nuten 47 sind relativ zueinander parallel verlaufend und äquidistant ausgebildet. Ein Querschnitt der Nuten 47 ist wellenförmig.

Die **Fig. 4** zeigt eine Platte 48, die im Unterschied zur Platte aus **Fig. 3** trapezförmig ausgebildete Nuten 49 aufweist.

Die **Fig. 5** zeigt eine Platte 50 mit Nuten 51, die im Unterschied zur Platte aus **Fig. 4** kerbförmig ausgebildet sind.

Die **Fig. 6** zeigt eine schematische Darstellung eines Verfahrens zur Herstellung einer hier nicht näher dargestellten Deckschicht in einer Platte 52, wobei hier im Bereich einer Nut 53 eine Kaltumformung von Stahlguss der Platte 52 mit einem Stempel 54 erfolgt.

Die **Fig. 7** zeigt die Platte 52, bei der mit einem Stempel 55 eine Kaltumformung eines Stegs 56, welcher durch die Nuten 53 ausgebildet ist, erfolgt.

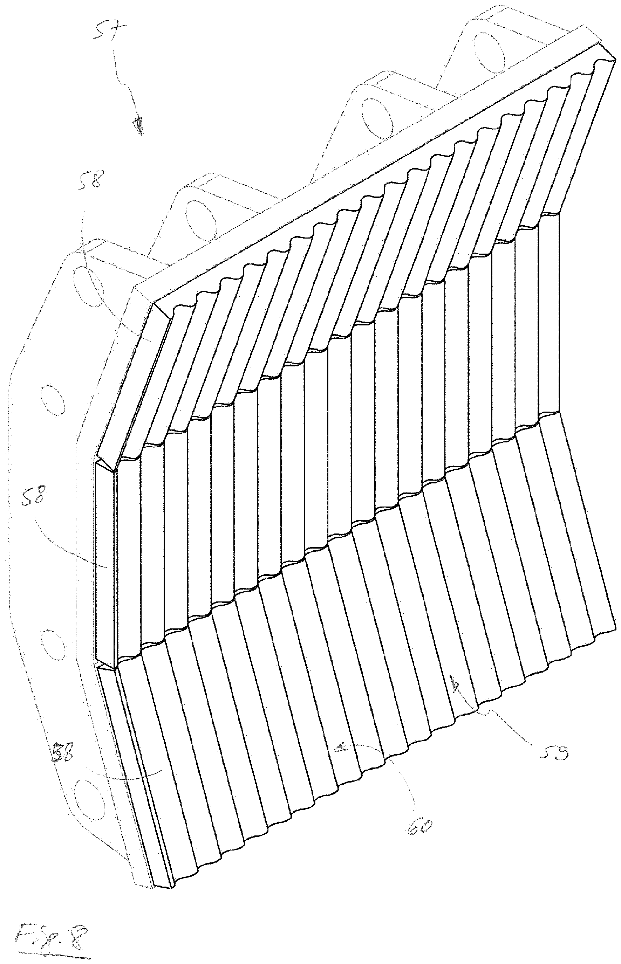

Die **Fig. 8** zeigt eine Prallschwinge 57 in einer perspektivischen Darstellung, wobei an der Prallschwinge 57 drei Platten 58 angeordnet sind, die zusammen eine Prallfläche 59 für Aufgabegut ausbilden. Die Platten 58 sind relativ zueinander in einem Winkel so angeordnet, dass die Prallfläche 59 einen Durchmesser eines hier nicht dargestellten Rotors angenähert ist. Weiter verlaufen Nuten 60 in den Platten 58 derart, dass diese in einer radialen Richtung relativ zu dem Rotor angeordnet sind.

## Patentansprüche

1. Innenraumauskleidung (40) für eine Zerkleinerungsmaschine (10), wobei die Innenraumauskleidung mit zumindest einer einstückigen Platte (31, 32, 33, 34, 41, 46, 48, 50, 52, 58) ausgebildet ist, die in einem Zerkleinerungsraum (13) der Zerkleinerungsmaschine anordbar ist, wobei die Platte aus Stahlguss ausgebildet ist, wobei der Stahlguss als ein Legierungsbestandteil 8 bis 25, vorzugsweise 10 bis 20 Masseprozent Mangan (Mn) enthält,
**dadurch gekennzeichnet,**
**dass** die Platte mit einer Tragschicht (43) und einer Deckschicht (42) ausgebildet ist, wobei die Deckschicht mittels Kaltumformung des Stahlgusses ausgebildet und kaltverfestigt ist, wobei die Deckschicht mittels von einem Stempel (54, 55), einer Walze oder von Hämmern auf die Platte ausgeübten Drucks kaltverfestigt ist.

2. Innenraumauskleidung nach Anspruch 1,
**dadurch gekennzeichnet,**
**dass** die Deckschicht (42) ein überwiegend martensitisches Gefüge aufweist.

3. Innenraumauskleidung nach Anspruch 1 oder 2,
**dadurch gekennzeichnet,**
**dass** die Tragschicht (43) ein überwiegend bainitisches und/oder austenitisches Gefüge aufweist.

4. Innenraumauskleidung nach einem der vorangehenden Ansprüche, **dadurch gekennzeichnet,**
**dass** die Deckschicht (42) eine vergleichsweise größere Härte als die Tragschicht (43) aufweist.

5. Innenraumauskleidung nach einem der vorangehenden Ansprüche, **dadurch gekennzeichnet,**
**dass** die Deckschicht (42) eine Härte von 350 bis 650 HB, vorzugsweise von 600 bis 650 HB aufweist.

6. Zerkleinerungsmaschine (10), mit einer Innenraumauskleidung (40) nach einem der vorangehenden Ansprüche, wobei die Zerkleinerungsmaschine einen Rotor (14) und ein Gehäuse (11) umfasst, wobei das Gehäuse einen Zerkleinerungsraum (13), einen Aufgabeschacht (12) und einen Ausgabeschacht (15) ausbildet, wobei der Rotor zur Zerkleinerung von Aufgabegut innerhalb des Zerkleinerungsraums drehbar angeordnet ist, derart, dass Aufgabegut über den Aufgabeschacht dem Zerkleinerungsraum zuführbar und zerkleinertes Aufgabegut über den Ausgabeschacht aus dem Zerkleinerungsraum ausleitbar ist, wobei eine Platte (31, 32, 33, 34, 41, 46, 48, 50, 52, 58) der Innenraumauskleidung in dem Zerkleinerungsraum angeordnet ist und eine Prallfläche (44, 59) für Aufgabegut ausbildet.

7. Zerkleinerungsmaschine nach Anspruch 6,
**dadurch gekennzeichnet,**
**dass** die Innenraumauskleidung (40) eine Mehrzahl austauschbarer Platten (31, 32, 33, 34, 41, 46, 48, 50, 52, 58) umfasst.

8. Zerkleinerungsmaschine nach Anspruch 6 oder 7,
**dadurch gekennzeichnet,**
**dass** die Zerkleinerungsmaschine (10) eine Prallschwingenvorrichtung (21) umfasst, die eine Prallschwinge (23, 24, 57) aufweist, wobei die Prallschwinge in dem Zerkleinerungsraum (13) angeordnet und dem Rotor (14) zugeordnet ist, wobei die Platte (31, 32, 33, 34, 41, 46, 48, 50, 52, 58) an der Prallschwinge angeordnet ist.

9. Zerkleinerungsmaschine nach Anspruch 8,
**dadurch gekennzeichnet,**
**dass** die Prallschwinge (23, 24, 57) relativ zum Rotor (14) räumlich positionierbar ausgebildet ist, derart, dass ein Spalt (38, 39) zwischen der Prallschwinge und dem Rotor verstellbar ist.

10. Zerkleinerungsmaschine nach einem der Ansprüche 6 bis 9,
**dadurch gekennzeichnet,**
**dass** die Platte (31, 32, 33, 34, 41, 46, 48, 50, 52, 58) mit über die Prallfläche parallel und äquidistant verlaufenden Nuten (47, 49, 51, 53, 60) ausgebildet ist.

11. Zerkleinerungsmaschine nach Anspruch 10,
**dadurch gekennzeichnet,**
**dass** die Nuten (47, 49, 51, 53, 60) jeweils mit einem kerb-, rillen-, trapez-, evolventen- oder wellenförmigen Querschnitt ausgebildet sind.

12. Zerkleinerungsmaschine nach Anspruch 10 oder 11,
**dadurch gekennzeichnet,**
**dass** Platte (31, 32, 33, 34, 41, 46, 48, 50, 52, 58) derart positioniert ist, dass die Nuten (47, 49, 51, 53, 60) in radialer Richtung relativ zum Rotor (14) verlaufend angeordnet sind.

13. Verfahren zur Herstellung einer Innenraumauskleidung (40) einer Zerkleinerungsmaschine (10), wobei die Innenraumauskleidung mit zumindest einer einstückigen Platte (31, 32, 33, 34, 41, 46, 48, 50, 52, 58) ausgebildet wird, die in einem Zerkleinerungsraum (13) der Zerkleinerungsmaschine anordbar ist, wobei die Platte aus Stahlguss ausgebildet wird, wobei der Stahlguss als ein Legierungsbestandteil 8 bis 25, vorzugsweise 10 bis 20 Masseprozent Mangan (Mn) enthält, **dadurch gekennzeichnet,**
**dass** die Platte mit einer Tragschicht (43) und einer Deckschicht (42) ausgebildet wird, wobei die Deckschicht mittels Kaltumformung des Stahlgusses ausgebildet und kaltverfestigt wird, wobei die Deckschicht mittels von einem Stempel (54, 55), einer Walze oder von Hämmern auf die Platte ausgeübten Drucks kaltverfestigt wird.

14. Verfahren nach Anspruch 13,
**dadurch gekennzeichnet,**
**dass** mittels der Kaltumformung die Deckschicht (42) mit einem überwiegend martensitischen Gefüge ausgebildet wird.

15. Verfahren nach einem der Ansprüche 13 bis 14,
**dadurch gekennzeichnet,**
**dass** vor der Kaltumformung mittels Bearbeitung der Platte (31, 32, 33, 34, 41, 46, 48, 50, 52, 58) mit einem Scheibenfräser parallel und äquidistant verlaufende Nuten (47, 49, 51, 53, 60) ausgebildet werden.

## Claims

1. An interior lining (40) for a grinding machine (10), the interior lining being realized having a one-piece plate (31, 32, 33, 34, 41, 46, 48, 50, 52, 58) which is disposed in a grinding chamber (13) of the grinding machine, the plate being made of cast steel, the cast steel containing an alloy component of 8 to 25 % by mass, preferably 10 to 20 % by mass, manganese (Mn),
**characterized in that**
the plate is realized having a support layer (43) and a cover layer (42), the cover layer being realized by means of cold forming the cast steel and being cold-hardened, the cover layer being cold-formed by means of a pressure exerted on the plate by means of a die (54, 55), a roll or hammers.

2. The interior lining according to claim 1,
**characterized in that**
the cover layer (42) has a mostly martensitic structure.

3. The interior lining according to claim 1 or 2,
**characterized in that**
the support layer (43) has a mostly bainitic and/or austenitic structure.

4. The interior lining according to any one of the preceding claims, **characterized in that**
the cover layer (42) is comparatively harder than the support layer (43).

5. The interior lining according to any one of the preceding claims, **characterized in that**
the cover layer (42) has a hardness of 350 to 650 BHN, preferably of 600 to 650 BHN.

6. A grinding machine (10) which has an interior lining (40) according to any one of the preceding claims, the grinding machine comprising a rotor (14) and a casing (11), the casing forming a grinding chamber (13), a feed throat (12) and an outlet throat (15), the rotor being rotatably disposed in such a manner within the grinding chamber for grinding feed material that the feed material is supplied to the grinding chamber via the feed throat and ground feed material exits the grinding chamber via the outlet throat, a plate (31, 32, 33, 34, 41, 46, 48, 50, 52, 58) of the interior lining being disposed in the grinding chamber and forming an impact surface (44, 59) for feed material.

7. The grinding machine according to claim 6,
**characterized in that**
the interior lining (40) has a plurality of exchangeable plates (31, 32, 33, 34, 41, 46, 48, 50, 52, 58).

8. The grinding machine according to claim 6 or 7,
**characterized in that**
the grinding machine (10) has an impact-rocker device (21) which comprises an impact rocker (23, 24, 57), the impact rocker being disposed in the grinding chamber (13) and being allocated to the rotor (14), the plate (31, 32, 33, 34, 41, 46, 48, 50, 52, 58) being disposed on the impact rocker.

9. The grinding machine according to claim 8,
**characterized in that**
the impact rocker (23, 24, 57) is spatially positioned in such a manner with respect to the rotor (14) that a gap (38, 39) is adjusted between the impact rocker and the rotor.

10. The grinding machine according any one of the claims 6 to 9, **characterized in that**
the plate (31, 32, 33, 34, 41, 46, 48, 50, 52, 58) is realized having grooves (47, 49, 51, 53, 60) extending equidistantly and parallel over the impact surface.

11. The grinding machine according to claim 10,
**characterized in that**
the grooves (47, 49, 51, 53, 60) has a cross section in the shape of a notch, groove, trapeze, involute or wave.

12. The grinding machine according to claim 10 or 11,
**characterized in that**
the plate (31, 32, 33, 34, 41, 46, 48, 50, 52, 58) is positioned in such a manner that the grooves (47, 49, 51, 53, 60) are disposed in the radial direction relative to the rotor (14).

13. A method for producing an interior lining (40) of a grinding machine (10), the interior lining being realized having at least one one-piece plate (31, 32, 33, 34, 41, 46, 48, 50, 52, 58) which is disposed in a grinding chamber (13) of the grinding machine, the plate being made of cast steel, the cast steel containing an alloy component of 8 to 25 % by mass, preferably 10 to 20 % by mass, manganese (Mn), **characterized in that**
the plate is realized having a support layer (43) and a cover layer (42), the cover layer being realized by means of cold forming the cast steel and being cold-hardened, the cover layer being cold-formed by means of a pressure exerted on the plate by means of a die (54, 55), a roll or hammers.

14. The method according to claim 13,
**characterized in that**
the cover layer (42) is realized having a mostly martensitic structure due to cold forming.

15. The method according to claim 13 or 14,
**characterized in that**
the plate (31, 32, 33, 34, 41, 46, 48, 50, 52, 58) is treated using a side milling cutter to form grooves (47, 49, 51, 53, 60), which extend parallel and equidistantly, before cold forming.

## Revendications

1. Revêtement intérieur (40) pour une machine de broyage (10), le revêtement intérieur ayant une plaque (31, 32, 33, 34, 41, 46, 48, 50, 52, 58) qui est en une pièce et qui est disposée dans une chambre de broyage (13) de la machine de broyage, la plaque étant en acier coulé, l'acier coulé contenant un composant d'alliage de 8 à 25 % en masse, de préférence de 10 à 20 % en masse, de manganèse (Mn), **caractérisé en ce que**
la plaque a une couche de support (43) et une couche de couverture (42), la couche de couverture étant réalisée par formage de l'acier coulé à froid et étant écroui, la couche de couverture étant formée à froid au moyens d'une pression exercée sur la plaque par une étampe (54, 55), par un rouleau ou par des marteaux.

2. Revêtement intérieur selon la revendication 1,
**caractérisé en ce que**
la couche de couverture (42) a une structure principalement de la martensite.

3. Revêtement intérieur selon la revendication 1 ou 2,
**caractérisé en ce que**
la couche de support (43) a une structure principalement de l'austénite et/ou de la bainite.

4. Revêtement intérieur selon l'une quelconque des revendications précédentes,
**caractérisé en ce que**
la couche de couverture (42) est relativement plus dure que la couche de support (43).

5. Revêtement intérieur selon l'une quelconque des revendications précédentes,
**caractérisé en ce que**
la couche de couverture (42) a une dureté de 350 à 650 HB, de préférence de 600 à 650 HB.

6. Machine de broyage (10) qui a un revêtement intérieur (40) selon l'une quelconque des revendications précédentes, la machine de broyage comprenant un rotor (14) et un boîtier (11), le boîtier formant un chambre de broyage (13), une ouverture d'alimentation (12) et une ouverture de sortie (15), le rotor étant disposé de manière rotative dans la chambre de broyage pour broyer du matériau d'alimentation de telle manière que le matériau d'alimentation est alimenté à la chambre de broyage par l'ouverture d'alimentation et de telle manière que le matériau d'alimentation broyé sort la chambre de broyage par l'ouverture de sortie, une plaque (31, 32, 33, 34, 41, 46, 48, 50, 52, 58) du revêtement intérieur étant disposée dans la chambre de broyage et formant une surface d'impact (44, 59) pour le matériau d'alimentation.

7. Machine de broyage selon la revendication 6,
**caractérisé en ce que**
le revêtement intérieur (40) a une pluralité de plaques (31, 32, 33, 34, 41, 46, 48, 50, 52, 58) échangeables.

8. Machine de broyage selon la revendication 6 ou 7,
**caractérisé en ce que**
la machine de broyage (10) comprend des moyens de bras oscillant d'impact (21) qui comprend un bras oscillant d'impact (23, 24, 57), le bras oscillant d'impact étant disposé dans la chambre de broyage (13) et étant associé au rotor (14), la plaque (31, 32, 33, 34, 41, 46, 48, 50, 52, 58) étant disposée sur le bras oscillant d'impact.

9. Machine de broyage selon la revendication 8,
**caractérisé en ce que**
le bras oscillant d'impact (23, 24, 57) étant positionné spatialement par rapport au rotor (14) de telle manière qu'une fente (38, 39) est ajustée entre le bras oscillant d'impact et le rotor.

10. Machine de broyage selon l'une quelconque des revendications 6 à 9, **caractérisé en ce que**
la plaque (31, 32, 33, 34, 41, 46, 48, 50, 52, 58) comprend des rainures (47, 49, 51, 53, 60) étendant de manière équidistante et parallèle sur la surface d'impact.

11. Machine de broyage selon la revendication 10,
**caractérisé en ce que**
les rainures (47, 49, 51, 53, 60) ont une section transversale en forme d'encoche, de rainure, de trapèze, de développante ou d'onde.

12. Machine de broyage selon la revendication 10 ou 11,
**caractérisé en ce que**
la plaque (31, 32, 33, 34, 41, 46, 48, 50, 52, 58) est positionnée de telle manière que les rainures (47, 49, 51, 53, 60) sont disposées dans le sens radial par rapport au rotor (14).

13. Procédé pour la production d'un revêtement intérieur (40) d'une machine de broyage (10), le revêtement intérieur ayant au moins une plaque (31, 32, 33, 34, 41, 46, 48, 50, 52, 58) qui est en une pièce et qui est disposée dans une chambre de broyage (13) de la machine de broyage, la plaque étant en acier coulé, l'acier coulé contenant un composant d'alliage de 8 à 25 % en masse, de préférence de 10 à 20 % en masse, de manganèse (Mn),
**caractérisé en ce que**
la plaque a une couche de support (43) et une couche de couverture (42), la couche de couverture étant réalisée par formage de l'acier coulé à froid et étant écroui, la couche de couverture étant formée à froid au moyens d'une pression exercée sur la plaque par une étampe (54, 55), par un rouleau ou par des marteaux.

14. Procédé selon la revendication 13,
**caractérisé en ce que**
la couche de couverture (42) a une structure principalement de la martensite à cause du formage à froid.

15. Procédé selon la revendication 13 ou 14,
**caractérisé en ce que**
la plaque (31, 32, 33, 34, 41, 46, 48, 50, 52, 58) est traitée en utilisant une fraise en disque afin de former des rainures (47, 49, 51, 53, 60), qui s'étend de manière parallèle et équidistante, avant le formage à froid.
